(19) Europäisches Patentamt / European Patent Office / Office européen des brevets

(11) **EP 4 451 108 B1**

(12) **EUROPEAN PATENT SPECIFICATION**

(45) Date of publication and mention
of the grant of the patent:
**25.02.2026 Bulletin 2026/09**

(21) Application number: **22923570.0**

(22) Date of filing: **20.12.2022**

(51) International Patent Classification (IPC):
**G06F 3/16** *(2006.01)*    **G06F 3/01** *(2006.01)*
**G01S 15/00** *(2020.01)*    **G01S 15/88** *(2006.01)*

(52) Cooperative Patent Classification (CPC):
**G06F 3/01; G06F 3/017; G06F 3/165; G01S 15/88;**
**Y02D 30/70**

(86) International application number:
**PCT/CN2022/140224**

(87) International publication number:
**WO 2023/142784 (03.08.2023 Gazette 2023/31)**

(54) **VOLUME CONTROL METHOD AND ELECTRONIC DEVICE**

LAUTSTÄRKENSTEUERUNGSVERFAHREN UND ELEKTRONISCHE VORRICHTUNG

PROCÉDÉ DE COMMANDE DE VOLUME ET DISPOSITIF ÉLECTRONIQUE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **26.01.2022 CN 202210093467**

(43) Date of publication of application:
**23.10.2024 Bulletin 2024/43**

(73) Proprietor: **Huawei Technologies Co., Ltd.**
**Shenzhen, Guangdong 518129 (CN)**

(72) Inventors:
• **LU, Yulong**
  **Shenzhen, Guangdong 518129 (CN)**
• **ZHU, Yunfan**
  **Shenzhen, Guangdong 518129 (CN)**
• **HAN, Zhiqiang**
  **Shenzhen, Guangdong 518129 (CN)**
• **YU, Minjun**
  **Shenzhen, Guangdong 518129 (CN)**
• **LI, Rui**
  **Shenzhen, Guangdong 518129 (CN)**

(74) Representative: **Maiwald GmbH**
**Engineering**
**Elisenhof**
**Elisenstrasse 3**
**80335 München (DE)**

(56) References cited:
CN-A- 104 581 492    CN-A- 111 323 783
US-A1- 2016 044 394    US-A1- 2019 258 453
US-A1- 2021 239 831

**Description**

This application claims priority to Chinese Patent Application No. 202210093467.X, filed with the China National Intellectual Property Administration on January 26, 2022 and entitled "VOLUME CONTROL METHOD, ELECTRONIC DEVICE, AND READABLE STORAGE MEDIUM".

**TECHNICAL FIELD**

This application relates to the field of electronic technologies, and in particular, to a volume control method and an electronic device.

**BACKGROUND**

With the continuous popularity of smart devices, gesture recognition is more widely applied in the smart devices. For example, a user performs many meaningful human-machine interactions through mid-air gestures. For example, when a hand is dirty, the user can contactlessly answer a call, browse a web page, or turn off music. Currently, there are three common technical solutions for implementing the mid-air gestures: vision, radar, and ultrasonic solutions. The ultrasonic solution is not restricted by light, costs, and a material, may reuse a component on an existing terminal device, and has advantages of low power consumption and low costs. Therefore, the ultrasonic solution has gradually attracted wide attention and enters an actual commercial stage. An exemplary volume control method is described in US 2021/239831 A1.

However, during the existing gesture recognition, an ultrasonic wave is played by using a speaker, and an ultrasonic echo signal is generated after the ultrasonic wave is reflected by a gesture motion. An electronic device further processes the reflected ultrasonic callback signal, and outputs a recognition result. However, when the user simultaneously starts another application that plays audio by using the speaker, a gesture recognition rate decreases. As a result, a recognition result is inaccurate or even invalid, or audio listening effect of the user is affected, severely affecting user experience.

**SUMMARY**

In view of this, the present invention provides a volume control method and an electronic device, to ensure that a user listens to audio without being affected while ensuring recognition accuracy when an electronic device simultaneously plays an ultrasonic wave used for target recognition and an application with audio by using a speaker. This improves user experience. The invention is set out in the appended set of claims.

**BRIEF DESCRIPTION OF DRAWINGS**

FIG. 1a is a diagram of a scenario of gesture recognition according to an embodiment of this application;
FIG. 1b is a schematic diagram of a process of a gesture recognition method performed by an electronic device according to an embodiment;
FIG. 1c is a schematic diagram of a process of a gesture recognition method performed by an electronic device according to an embodiment;
FIG. 1d is a diagram of a relationship among loudness, system volume, and application volume according to an embodiment of this application;
FIG. 2a is a schematic diagram of a structure of an electronic device according to an embodiment of this application;
FIG. 2b is a block diagram of a software and hardware structure of an electronic device for implementing a volume control method according to an embodiment of this application;
FIG. 3 is a flowchart of a volume control method performed by a computer according to an embodiment of this application;
**[0043]** FIG. 4 is a comparison table of volume adjustment coefficients according to an embodiment of this application;
FIG. 5 is a linear schematic diagram in which a computer adjusts system volume in different cases according to an embodiment of this application;
FIG. 6 is a diagram of a sudden amplitude change in a time-domain signal of high-frequency audio according to an embodiment of this application;
FIG. 7 is a flowchart of a volume control method performed by a computer in another scenario according to another embodiment of this application;
FIG. 8a is a waveform diagram in which an amplitude changes with a cycle based on a fade-in function according to an embodiment of this application;
FIG. 8b are linear schematic diagrams in which amplitudes that correspond to fade-in function and that change with time according to an embodiment of this application;
FIG. 9a is a schematic diagram in which an amplitude changes with time obtained without adding an amplitude coefficient according to an embodiment;
FIG. 9b is a linear schematic diagram in which an amplitude changes with time without adding an amplitude coefficient according to an embodiment; and
FIG. 10 is a block diagram of a system on chip according to some embodiments of this application.

**DESCRIPTION OF EMBODIMENTS**

The following clearly and completely describes technical solutions in embodiments of this application with reference to the accompanying drawings in embodiments of this application.

For ease of understanding of the technical solutions of this application, terms in this application are first explained.

An ultrasonic wave is a sound wave that cannot be heard by a human ear at a frequency higher than 20,000 hertz. The ultrasonic wave may be emitted by using a speaker of an electronic device.

Audio is a sound wave that can be perceived by the human ear at a frequency ranging from 20 hertz to 20,000 hertz.

A volume value means a value that can be adjusted by a user or the electronic device and represents volume.

A preset volume value is a minimum system volume value for implementing ultrasonic recognition, for example, a minimum system volume value required to meet gesture recognition accuracy when the electronic device uses the ultrasonic wave to implement a gesture recognition function. Usually, only when system volume is greater than the preset volume value, a to-be-implemented function of the ultrasonic wave can be normally used, or relatively high use effect can be maintained.

Loudness = system volume value × application volume value. The loudness is volume played by the electronic device. A specific decibel value of the volume may be obtained by detecting, by a specific loudness detecting instrument, a sound wave played by the electronic device. The loudness may be further understood as volume that can be perceived by the user when an application is started, namely, listening volume.

In a process of playing a same sound source by using an audio system of the electronic device, if the system volume and application volume are adjusted based on a loudness calculation formula, loudness before and after adjustment is theoretically equal. However, the loudness before and after adjustment is different during actual output of an audio output device. A volume adjustment coefficient is an unknown non-linear factor of the loudness difference before and after adjustment. That is, actual unadjusted system volume value × unadjusted application volume value = adjusted system volume value × adjusted application volume value × volume adjustment coefficient.

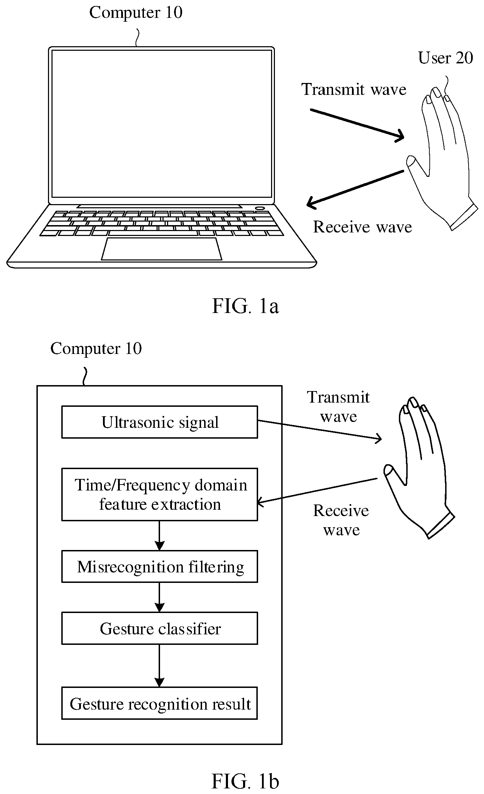

FIG. 1a is a diagram of a scenario of gesture interaction between a computer and a user according to an embodiment of this application. The diagram of the scenario includes a notebook computer 10 and a user 20. The computer 10 may transmit an ultrasonic signal (a transmit wave) by using a speaker like a loudspeaker of an audio system. The ultrasonic wave generates an ultrasonic echo signal (a receive wave) after being reflected by a gesture. A microphone of the computer receives the ultrasonic echo signal for further processing, and then the computer 10 obtains the gesture and executes an instruction related to the gesture. In this way, the user can contactlessly control the computer. This is applicable to a case in which a hand is wet or dirty and it is inconvenient to directly touch the computer. In addition, a mid-air gesture is not restricted by light, costs, and a material, may reuse a component on an existing electronic device, like a loudspeaker and a microphone, and has low power consumption and low costs. Therefore, the mid-air gesture attracts increasing attention.

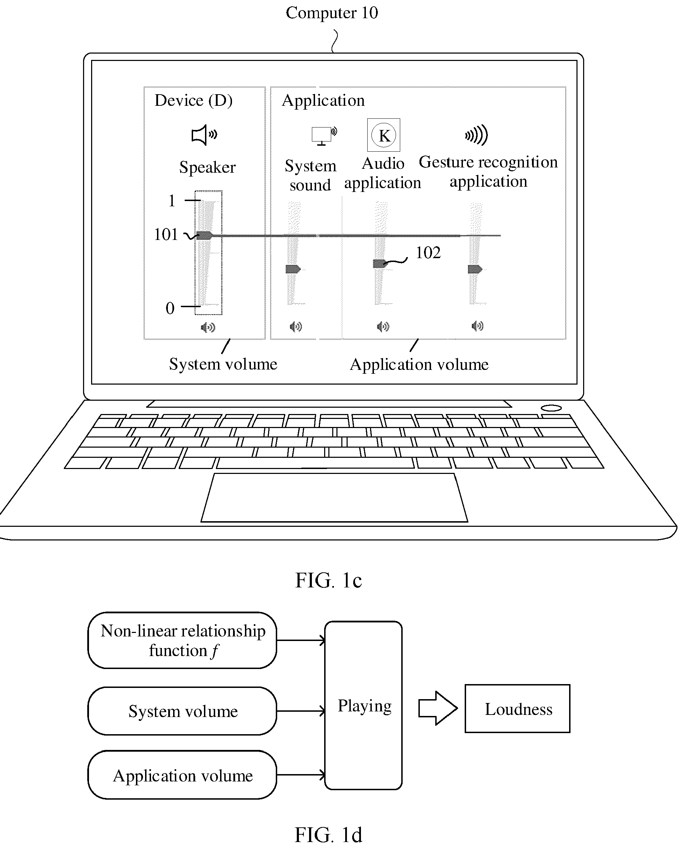

FIG. 1b is a schematic flowchart of a gesture recognition method performed by a computer according to an embodiment. With reference to FIG. 1, the computer 10 emits the ultrasonic signal. A gesture recognition application may be set up on the computer 10. After the user starts the application recognition application, the computer emits the ultrasonic signal by using the loudspeaker. After the user 20 performs a preset gesture motion, the ultrasonic signal generates the ultrasonic echo signal after being reflected by the hand, and waveform data is obtained by sampling the ultrasonic echo signal by using the microphone. The computer 10 then performs time domain feature extraction or frequency domain feature extraction on the waveform data, removes redundant data through misrecognition filtering, inputs an extracted feature into a gesture classifier, and recognizes the gesture motion of the user (a gesture recognition result). Then, the computer may execute a corresponding instruction based on the gesture motion, to complete a process of controlling the computer contactlessly. For a detailed process of gesture recognition based on a location of transmitting the ultrasonic wave, refer to an existing solution. Details are not described herein. The following describes a to-be-resolved technical problem in this application with reference to the foregoing scenario.

FIG. 1c is a schematic diagram of an interface of a volume control according to an embodiment of this application. As shown in FIG. 1c, the interface includes the control, and the control may include a system volume adjustment box and an application volume adjustment box. When an audio application is played, volume played from the speaker is a product of system volume and application volume. In this application, a system volume value of a volume bar in the system volume adjustment box represents the system volume, and an application volume value of the volume bar represents the application volume. A maximum application volume value is equal to the system volume value. As shown in FIG. 1d, the system volume value ranges from 0 to 1, and the application volume value also ranges from 0 to 1. The user may manually adjust the system volume value by using a slider 101 on the volume bar, or adjust the application volume value corresponding to the audio application by using a slider 102. In some cases, as shown in FIG. 1d, when the computer simultaneously plays music and the ultrasonic wave, two sound waves with different frequencies reuse the speaker of the audio system at the same time. However, intensity of the ultrasonic signal directly affects implementation of some functions, for example, an ultrasonic gesture recognition accuracy. Therefore, to ensure the intensity of the ultrasonic signal, the system volume of the audio system needs to ensure at least basic volume (a preset volume value). Algorithm recognition accuracy can be ensured only when the system volume value reaches the preset volume value (for example, the system volume value ranges from 0 to 1).

This embodiment of this application uses an example in which the system volume value ranges from 0 to 1, and the application volume value ranges from 0 to 1. In some embodiments, 0 to 100 may alternatively be used. This is not limited herein.

The following uses an example in which the ultrasonic wave is used for gesture recognition for description. If the preset volume value required to ensure the gesture recognition accuracy is 0.4, when the computer 10 reuses the speaker to play audio such as music, and the user 20 sets the current system volume value of the computer to 0.2, because 0.2 is less than 0.4, the computer cannot accurately recognize the gesture of the user. This reduces the gesture recognition accuracy. If the system volume value is directly adjusted to 0.4, and it is ensured that unadjusted loudness = adjusted loudness. To be specific, a volume value of an adjusted application volume v2 is obtained based on a formula: Unadjusted system volume V1 (0.2) × unadjusted application volume v1 (known) = adjusted system volume V2 (0.4) × adjusted application volume v2 (unknown). The adjusted application volume v2 is obtained through calculation based on this formula. However, during actual audio play, the unadjusted loudness may be different from the adjusted loudness. In this case, audio loudness listened to by the user is different from audio loudness set by the user. This reduces user experience.

Based on the technical problem found in the foregoing scenario, it is found through research that, after the system volume is adjusted, an unknown adjustment coefficient is required for adjustment. In this case, adjusted total volume can still be the same as or close to total unadjusted volume.

FIG. 1d is a diagram of a relationship among loudness, system volume, and application volume according to an embodiment of this application. As shown in FIG. 1d, there is a non-linear relationship function f among the loudness, the system volume, and the application volume. To be specific, the foregoing formula is actually: Unadjusted system volume value V1 × unadjusted application volume value v1 = adjusted system volume value V2 × adjusted application volume value v2 × volume adjustment coefficient. The volume adjustment coefficient may be precalculated and stored by using the non-linear relationship function f during offline application, and may be directly obtained from stored data during online application. Alternatively, the volume adjustment coefficient may be obtained through calculation based on the non-linear function f (unadjusted system volume V1, adjusted system volume value V2) during online application. Alternatively, the volume adjustment coefficient is obtained based on a pre-trained model. The following embodiments describe a derivation process of the adjustment coefficient in detail.

With reference to the diagrams of the scenarios shown in FIG. 1a and FIG. 1c, a volume control method provided in this application is described based on the foregoing findings.

Refer to FIG. 1a. A hardware switch for turning on or off play of the ultrasonic wave may be disposed on the computer 10. Alternatively, a specific application may be set to turn on or off the ultrasonic wave, for example, the gesture recognition application. The user may play the ultrasonic wave by the computer by using the hardware switch, or play the ultrasonic wave by the computer by using the application. After the user turns on the ultrasonic playing switch by using the gesture recognition application, the computer invokes the speaker of the audio system to play the ultrasonic signal. If the computer 10 determines that another audio application that needs to reuse the speaker is started, the computer 10 first determines whether the current system volume of the audio system is lower than the minimum basic volume (the preset volume value) corresponding to the gesture recognition application. For example, the current system volume (the unadjusted system volume) is 0.2, and the preset volume value (the adjusted system volume) is 0.4. If the computer 10 determines that 0.2 is less than 0.4, the current system volume 0.2 is adjusted to the preset volume value 0.4 that is required by the gesture recognition application, to meet a function that the gesture recognition application can accurately recognize the gesture. In addition, the computer 10 determines, based on the unadjusted system volume value 0.2 and the adjusted system volume 0.4, a volume adjustment coefficient corresponding to 0.2 and 0.4. The computer 10 obtains the application volume (v2) for adjusting the audio application based on the volume adjustment coefficient. In this case, the unadjusted loudness and the adjusted loudness remain unchanged or a difference between the unadjusted loudness and the adjusted loudness is less than preset loudness.

According to the volume control method in this embodiment of this application, the computer can accurately recognize the gesture motion, and listening loudness of the user before and after adjustment is not affected. This improves user experience.

In the foregoing embodiments, that the speaker transmits the ultrasonic signal is described in an example by using software such as the gesture recognition application. In this application, the ultrasonic signal may alternatively be transmitted in a form of hardware, for example, a hardware switch is set to control the audio system to enable the speaker to transmit the ultrasonic signal. This is not limited herein.

In the foregoing embodiments, the notebook computer is used as an electronic device for description. In some embodiments of this application, the electronic device may alternatively be a mobile phone, a tablet computer, a desktop computer, an ultra-mobile personal computer, a personal digital assistant (personal digital assistant, PDA), a television, or a wearable electronic device that can transmit an ultrasonic signal and receive an ultrasonic echo signal, for example, a watch or a wristband.

The following describes the volume control method in this embodiment of this application with reference to a specific structure of the electronic device.

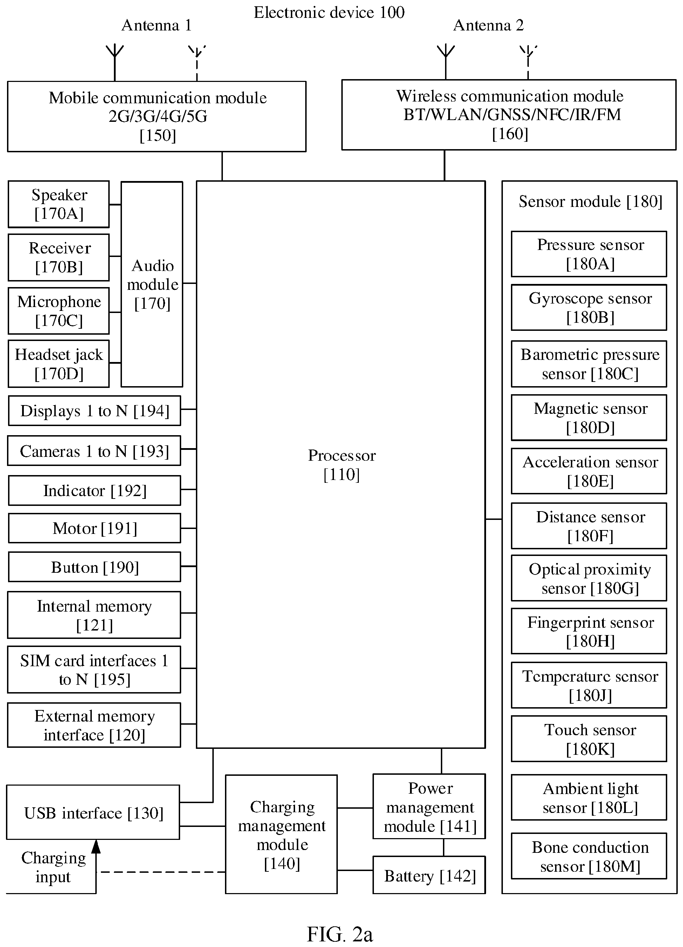

FIG. 2a is a schematic diagram of a structure of an electronic device according to an embodiment of this application. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, or the like.

It may be understood that the structure shown in this embodiment of the present invention does not constitute a specific limitation on the electronic device 100. In other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The processor 110 may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or data again, the processor 110 may invoke the instructions or data directly from the memory. This avoids repeated access, reduces waiting time of the processor 110, and improves system efficiency.

In some embodiments, when the processor 110 determines that both an ultrasonic application and an audio application are started, and reuses a speaker of an audio system to separately transmit an ultrasonic signal and an audio signal that can be heard by a user, the processor 110 first determines whether a current system volume value is lower than a minimum system volume value (a preset volume value) required by the ultrasonic application. If the current system volume value is lower than the minimum system volume value required by the ultrasonic application, the processor 110 adjusts the current system volume value to the preset volume value, and determines an adjustment coefficient corresponding to both the current system volume value and the preset volume value. The processor 110 adjusts application volume of the audio application based on the adjustment coefficient. In this case, audio loudness of the audio application played from the speaker before and after adjustment is the same, or a deviation between the audio loudness of the audio application played from the speaker before and after adjustment is less than preset loudness. In this way, intensity of the ultrasonic signal can be met, gesture recognition and the like can be accurately performed through the ultrasonic wave, and listening volume of the user can be not affected. In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/-transmitter, UART) interface, a mobile industry processor interface (mobile industry processor interface, MIPI), a general-purpose input/output (general-purpose input/output, GPIO) interface, or a subscriber identity module (subscriber identity module, SIM) interface.

The I2S interface may be configured to perform audio communication. In some embodiments, the processor 110 may include a plurality of groups of I2S buses. The processor 110 may be coupled to the audio module 170 by using the I2S bus, to implement communication between the processor 110 and the audio module 170, and play the ultrasonic signal that cannot be perceived by the user and the audio signal that can be perceived by the user.

In some embodiments, the processor 110 communicates with the audio module 170 through the I2S interface. For example, the processor 110 controls the speaker 170A in the audio module 170 to play the ultrasonic signal, the audio sound wave that can be perceived by the user, or the like. In addition, the processor may further receive, by using the microphone in the audio module 170, waveform data corresponding to an ultrasonic echo signal reflected back by a path-crossing obstacle, for example, a gesture motion, and determine the gesture motion based on the waveform data. The processor 110 executes a corresponding instruction based on the gesture motion, so that the user controls the electronic device 100 contactlessly.

In some embodiments, the audio module 170 may alternatively transmit the audio signal to the wireless communication module 160 through the PCM interface, to implement a function of answering a call by using a Bluetooth earphone. Both the I2S interface and the PCM interface may be configured to perform audio communication.

It may be understood that an interface connection relationship between the modules in this embodiment of the present invention is merely an example for description, and does not constitute a limitation on the structure of the electronic device 100. In some other embodiments of this application, the electronic device 100 may alternatively use an interface connection manner different from that in the foregoing embodiments, or use a combination of a plurality of interface connection manners.

A wireless communication function of the electronic device 100 may be implemented by using the antenna 1, the antenna 2, the mobile communication module 150, the wireless communication module 160, the modem processor, the baseband processor, and the like.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

In some embodiments, in the electronic device 100, the antenna 1 and the mobile communication module 150 are coupled, and the antenna 2 and the wireless communication module 160 are coupled. Therefore, the electronic device 100 can communicate with a network and another device through a wireless communication technology. In an embodiment of this application, the electronic device 100 may communicate with another electronic device by using the wireless communication module 160, and obtain a volume adjustment coefficient corresponding to both the current system volume value and the preset volume value.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light emitting diode (quantum dot light-emitting diode, QLED), or the like. In some embodiments, the electronic device 100 may include one or N displays 194. N is a positive integer greater than 1.

In some embodiments, the display may display an application, a switch control, or the like. The user may enable a gesture recognition function by using a gesture recognition application on the display, or may set a gesture recognition enabling function by using a control such as a setting function. In this case, the electronic device 100 plays the ultrasonic wave by using the speaker 170A, or plays the audio corresponding to the audio application, or the like.

The external memory interface 120 may be configured to connect to an external storage card, for example, a micro SD card, to increase a storage capability of the electronic device 100. The external memory card communicates with the processor 110 through the external memory interface 120, to implement a data storage function.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store all adjustment coefficients corresponding to all unadjusted system volume values (0 to 1) and adjusted system volume values (0 to 1), or store a training model obtained through training based on the unadjusted system volume value and the adjusted system volume value, or store a non-linear function. When determining that the current system volume value needs to be adjusted, the processor 110 reads a corresponding adjustment coefficient stored in the internal memory 121. In addition, the internal memory 121 may include a high-speed random access memory, and may further include a nonvolatile memory, for example, at least one magnetic disk storage device, a flash memory, or a universal flash storage (universal flash storage, UFS). The processor 110 runs the instructions stored in the internal memory 121 and/or the instructions stored in the memory that is disposed in the processor, to perform various functional applications and data processing of the electronic device 100.

The electronic device 100 may implement an audio function, like playing the ultrasonic wave used for gesture recognition or playing the audio that can be perceived by the user, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode the audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may be used to listen to music, answer a hands-free call, or play the ultrasonic wave by using the speaker 170A.

The microphone 170C, also referred to as a "mike" or a "mic", is configured to convert a sound signal into an electrical signal. For example, when a hand of the user is placed at a specified position, and a preset gesture is performed, the ultrasonic wave transmitted by using the speaker 170A is reflected by the hand and reflects back an ultrasonic echo. The ultrasonic echo is further processed by the microphone to obtain the waveform data related to the hand gesture. In addition, the processor 110 further recognizes the user gesture.

The pressure sensor 180A is configured to sense a pressure signal and may convert the pressure signal into an electrical signal. In some embodiments, the pressure sensor 180A may be disposed on the display 194. In some embodiments, when the user taps and presses the switch control or the like on the display 194, the gesture recognition function may be manually enabled.

The touch sensor 180K is also referred to as a "touch control device". The touch sensor 180K may be disposed on the display 194. The touch sensor 180K and the display 194 constitute a touchscreen, which is also referred to as a "touch screen". The touch sensor 180K is configured to detect a touch operation performed on or near the touch sensor 180K. The touch sensor may transfer a detected touch operation to the application processor, to determine a type of a touch event. A visual output related to the touch operation may be provided on the display 194. In some other embodiments, the touch sensor 180K may alternatively be disposed on a surface of the electronic device 100 at a location different from that of the display 194. In some embodiments, when the user taps the audio application on the display 194, the touch sensor 180K receives the action and generates a touch event. The processor 110 further processes an instruction corresponding to the touch event, and executes the corresponding instruction, for example, taps a music application, to finally play a song.

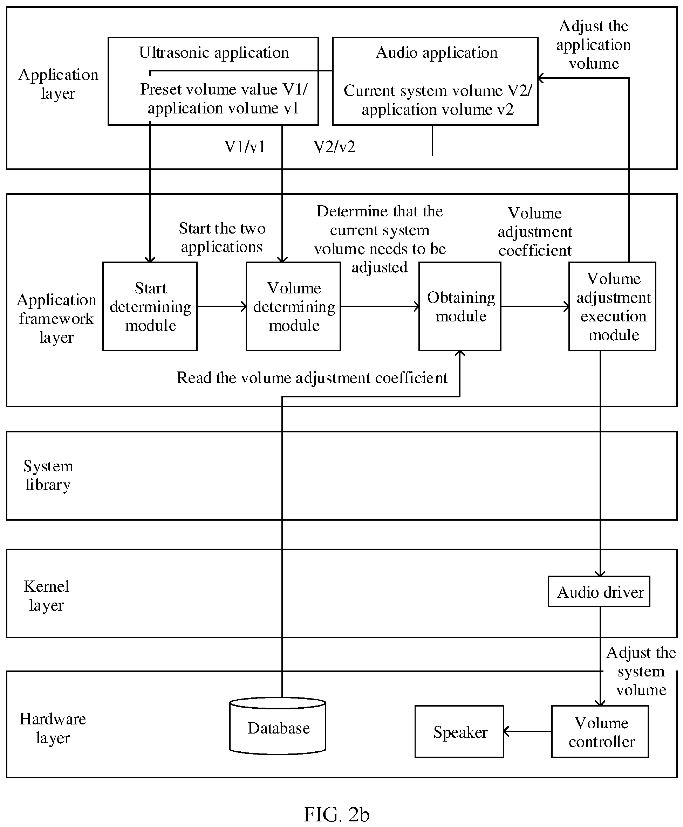

FIG. 2b is a block diagram of a software and hardware structure of an electronic device for implementing a volume control method according to an embodiment of this application.

In a layered architecture, software is divided into several layers, and each layer has a clear role and task. The layers communicate with each other through a software interface. In some embodiments, as shown in FIG. 2b, a system is divided into four layers: an application layer, an application framework layer, a system library, and a kernel layer from top to bottom. In some other embodiments, the system is divided into five layers: an application layer, an application framework layer, a system library, a hardware abstraction layer, and a kernel layer from top to bottom.

The application layer may include a series of application packages.

As shown in FIG. 2b, the application layer may include a gesture recognition application, a music application, and the like. In addition, in some embodiments, the application layer may further include applications such as camera, gallery, calendar, call, map, navigation, WLAN, Bluetooth, video, messaging, and recording.

In some embodiments, the user may implement a logical operation of gesture recognition by using the gesture recognition application, to control the electronic device 100 contactlessly.

The application framework layer provides an application programming interface (application programming interface, API) and a programming framework for an application at the application layer. The application framework layer includes some predefined functions.

As shown in FIG. 2b, the application framework layer may include a start determining module, a volume determining module, an obtaining module, a volume adjustment execution module, and the like.

As shown in FIG. 2b, the start determining module may be configured to determine whether the gesture recognition application and the music application are started. After determining that the two applications are started, the start determining module sends a notification indicating that both the two applications are started to the volume determining module. The volume determining module receives the notification, obtains a preset volume value V1 (minimum system volume that ensures the gesture recognition accuracy) and current system volume V2 that correspond to the gesture recognition application, and determines whether the current system volume value is less than the preset volume value. When it is determined that the current system volume value V2 is less than the preset volume value V1, the volume determining module sends a determining result to the obtaining module. The obtaining module may obtain the preset volume value V1 and the current system volume value V2 in a specified process space, obtain a corresponding volume adjustment coefficient from a database, and send the volume adjustment coefficient to the volume adjustment execution module. The volume adjustment execution module adjusts the current system volume value to the preset volume value, determines an actual adjusted application volume value v2 based on a formula: Unadjusted system volume V1 × unadjusted application volume v1 = adjusted system volume V2 × adjusted application volume value v2 × volume adjustment coefficient, and adjusts the application volume v1 of the music application to the application volume value v2. Therefore, it can be ensured that the gesture recognition application can accurately recognize the gesture motion of the user. In addition, it can also be ensured that total volume before and after adjustment is consistent or a difference between the total volume before and after adjustment is within a preset value.

Android runtime includes a core library and a virtual machine. The Android runtime is responsible for scheduling and management of an Android system.

The core library includes two parts: a function that needs to be invoked by Java language and a core library of Android.

The application layer and the application framework layer run on the virtual machine. The virtual machine executes Java files of the application layer and the application framework layer as binary files. The virtual machine is configured to perform functions such as object lifecycle management, stack management, thread management, security and exception management, and garbage collection.

System security, memory management, process management, network protocol stack, and driver model depend on the kernel layer. At least an inter process communication (Inter Process Communication, IPC), a display driver, a soft bus, an audio driver, and a storage driver may be included.

As shown in FIG. 2b, as a hardware structure, a hardware layer may include a speaker, a database, a volume controller, and the like. The database may be the internal memory 121 in FIG. 2a, and stores an adjustment coefficient comparison table and the like. As a control circuit of the system volume of the audio system, the volume controller is configured to control volume played by using the speaker.

The foregoing software architecture is described by using the Android system as an example. In some embodiments, the software architecture may be further applied to a HarmonyOS. The foregoing modules may be disposed in a framework, an execution body layer, a system layer, or the like of an operating system. This is not limited herein.

The following describes the volume control method in this embodiment of this application with reference to a specific embodiment.

In the following embodiments, an example in which the method is applied to a PC computer is used. For a specific structure of the computer, refer to the structures shown in FIG. 2a and FIG. 2b.

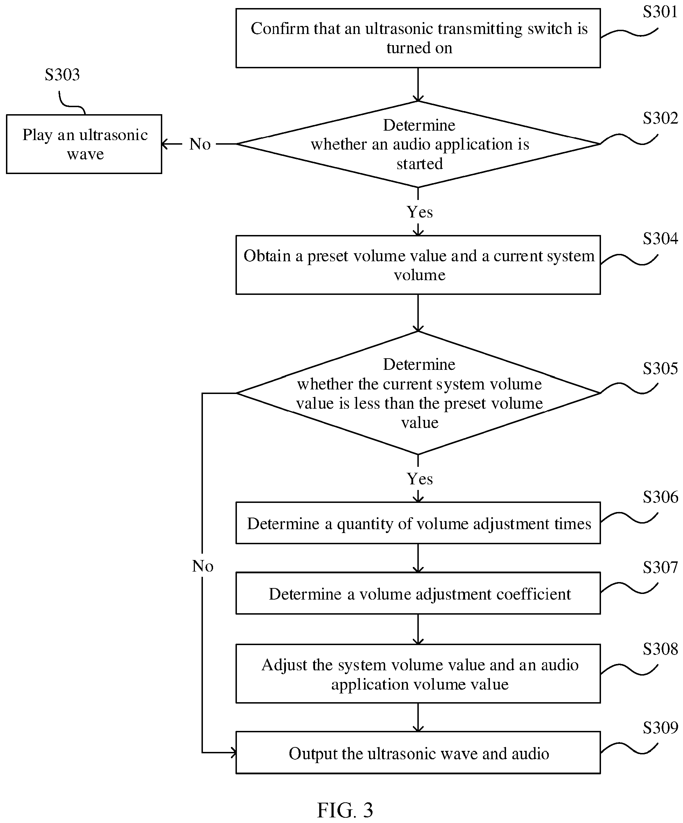

FIG. 3 is a flowchart of a volume control method performed by a computer in a scenario according to an embodiment of this application. The method is performed by a PC. As shown in FIG. 3, the flowchart includes S301 to S309.

S301: The computer determines that an ultrasonic transmitting switch is turned on.

In this embodiment of this application, when the computer receives an instruction for turning on the ultrasonic control switch, for example, a hardware switch is disposed on the computer, and the hardware switch is electrically connected to an ultrasonic generator, the computer determines that the ultrasonic transmitting switch is turned on, and transmits an ultrasonic wave by using a speaker. The ultrasonic wave may be used for gesture recognition, or may be used for facial recognition or a function like face distance measurement. In addition, a software switch may alternatively be used. For example, the ultrasonic transmitting switch is turned on by using a gesture recognition application. In this case, the computer transmits the ultrasonic wave by using the speaker, and implements a specific function through the ultrasonic wave. The following embodiments use an example in which the ultrasonic wave is used for gesture recognition for description.

S302: The computer determines whether an audio application is started.

The speaker is reused after the audio application is started. Based on whether a current application reuses the speaker with the ultrasonic wave, the computer may determine that the audio application is started. Alternatively, the computer compares the currently running application with an application in a trustlist. When the currently running application corresponds to the application in the trustlist, the computer determines that the audio application is started. The trustlist may be a pre-stored application list. The application in the trustlist is usually an application that avoids a conflict with a gesture recognition function.

When determining that the audio application is started, the computer performs S304. If the computer determines that the audio application is not started, the computer performs S303: playing the ultrasonic wave.

In S304, the computer obtains a minimum system volume value (a preset volume value) required for ultrasonic recognition, and a current system volume value.

In this embodiment of this application, the preset volume value is a preset system volume value. Only when the system volume value is greater than or equal to the preset volume value, the computer can accurately recognize a gesture of a user, to ensure to-be-implemented effect of the ultrasonic.

In this embodiment of this application, when the ultrasonic wave transmitting switch is turned on by using the gesture recognition application, loudness of the ultrasonic wave = system volume × application volume. To allow the loudness of the ultrasonic wave to reach specified loudness, a lower system volume value is desired when the application volume is fixed. To be specific, when the application volume corresponding to the gesture recognition application is adjusted to a maximum volume value 1, a relative minimum value of the system volume may be obtained, for example, 0.4. Therefore, when the gesture recognition application is started, the computer may set a default application volume of the gesture recognition application to 1. In this way, the system volume value required by the gesture recognition application is kept as the relative minimum value, making it easier to satisfy the system volume value required by the gesture recognition application.

S305: The computer determines whether the current system volume value is less than the preset volume value.

For example, when the current system volume value is 0.2, and the preset volume value is 0.4, the computer determines that 0.2 is less than 0.4, and S306 is performed. If the current system volume value is not less than the preset volume value, S309 is performed to directly output the ultrasonic wave and audio.

S306: The computer determines a quantity of volume adjustment times.

In this embodiment of this application, after determining that the system volume needs to be adjusted, the computer needs to determine, based on a difference between the current system volume value 0.2 and the preset volume value 0.4 before the system volume is adjusted, whether the system volume needs to be adjusted for a plurality of times, to avoid a relatively large loudness error due to an excessively large adjustment of the system volume. An adjustment process is specifically described in the following S308.

In some embodiments of this application, S306 may be not performed. When adjusting the system volume, the computer may directly adjust the current system volume value to the preset volume value. This is not limited herein.

S307: The computer determines a volume adjustment coefficient. There is no sequence between S307 and S306. For a specific process of determining the volume adjustment coefficient, refer to the following description corresponding to S307.

S308: The computer adjusts the system volume and the audio application volume. The audio application volume is adjusted based on the volume adjustment coefficient. For a specific adjustment process, refer to the following description corresponding to S308. S309: The computer outputs the ultrasonic wave and the audio. The ultrasonic wave adjusted by using the foregoing steps may allow the computer to accurately recognize the gesture of the user. In addition, listening loudness of the user does not change. The following describes S307 and S308 in detail with reference to specific embodiments.

In S307, the volume adjustment coefficient may determine, based on a volume adjustment coefficient comparison table that is traversed in advance, the volume adjustment coefficient corresponding to both the current system volume value and the preset volume value. A specific traversal process of the volume adjustment coefficient comparison table may be performed based on a formula: Unadjusted system volume (current system volume value $V_i$) × unadjusted application volume ($v_i$) = adjusted system volume (preset volume value $V_j$) × adjusted application volume ($v$) × volume adjustment coefficient. $V_i$ may represent a volume value from 0 to 1, and $v_i$ may be a volume value from 0 to 1. For ease of description, $v_i$ is set to 1. $V_j$ may represent a volume value from 0 to 1. Because adjustment is performed only when the current system volume value is less than the preset volume value, only a case in which the current system volume value is less than the preset volume value needs to be traversed.

The following describes a process of obtaining the volume adjustment coefficient offline.

1. Take a value from 0 to 1 as a value of the unadjusted system volume $V_i$, and set the unadjusted application volume to a fixed value 1. Play an ultrasonic source or audio with a length of n seconds. At the same time, receive and record the ultrasonic wave or audio through recording, and obtain, through calculation, received audio loudness E1. Alternatively, play and measure the ultrasonic wave or audio for a plurality of times, to obtain an average audio loudness E1.

2. Take a value from 0 to 1 as a value of the adjusted system volume $V_j$, and ensure that $V_i$ is less than $V_j$.

3. Deduce that the adjusted application volume $v = V_i/V_j$ based on a formula: Unadjusted system volume (current system volume value $V_i$) × unadjusted application volume ($v_i$) = adjusted system volume (preset volume value $V_j$) × adjusted application volume ($v$). Based on the adjusted system volume $V_j$ and the adjusted application volume $v$, play the same ultrasonic source or audio in step 1. At the same time, receive and record the ultrasonic wave or audio through recording, and obtain, through calculation, received audio loudness. Alternatively, play and measure the ultrasonic wave or audio for a plurality of times, to obtain an average audio loudness E2.

4. Determine values of E2 and E1. If E2 - E1 > an allowable error value, adjust the adjusted application volume $v$ based on the error value. Repeat step 3 again until E2 - E1 < the allowable error value, and the step ends.

5. Obtain f (unadjusted system volume $V_i$, adjusted system volume $V_j$) = $v/(V_i/V_j)$.

6. Change and traverse all required $V_i$ and $V_j$ until all required volume adjustment coefficients are obtained and stored.

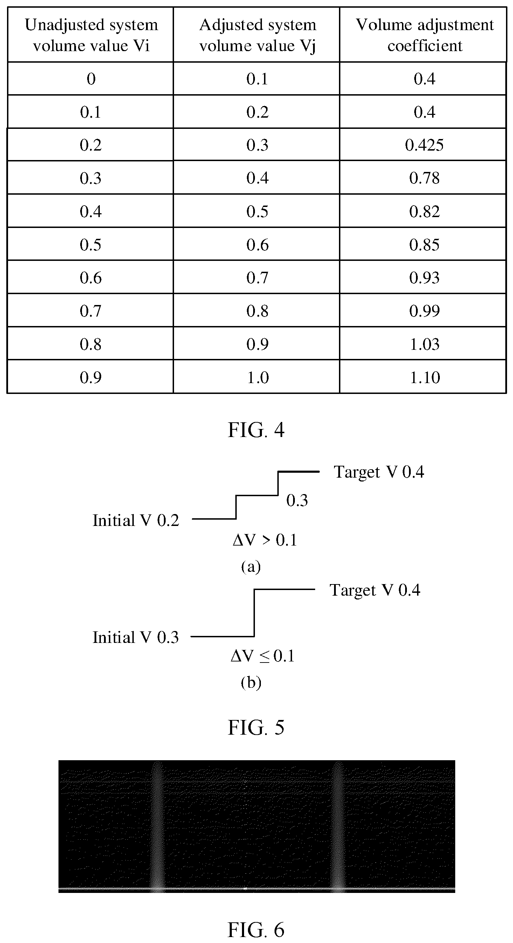

FIG. 4 is a volume adjustment coefficient comparison table according to an embodiment of this application. In the table, a condition that the unadjusted system volume value $V_i$ is greater than the adjusted system volume value $V_j$ is satisfied. Therefore, the unadjusted system volume value $V_i$ ranges from 0 to 0.9, and the adjusted system volume value Vj ranges from to 0.1 to 1.0. A unique adjustment coefficient that corresponds to each group including an unadjusted system volume value and an adjusted system volume value is obtained. In an actual adjustment process of the computer, a corresponding volume adjustment coefficient may be read based on specific system volume values before and after adjustment. In addition, in an actual adjustment process of the computer, a corresponding adjustment coefficient may alternatively be obtained through calculation based on the function relationship in step 5.

In some embodiments, an adjustment coefficient calculation model may be obtained through training by using all parameter sets in the formula as input data for model training. In an actual adjustment process of the computer, a volume adjustment coefficient corresponding to both the system volume values before and after adjustment may alternatively be obtained by using the adjustment coefficient calculation model.

S308: The computer adjusts the system volume value and the audio application volume value. The adjusting the system volume means adjusting the unadjusted system volume to the preset volume value. The audio application volume (the adjusted application volume v) is obtained based on the formula: Adjusted application volume v = (unadjusted system volume × unadjusted application volume)/(adjusted system volume × volume adjustment coefficient). The final audio application volume value is obtained. This can ensure the loudness of the ultrasonic wave and the ultrasonic recognition accuracy or detection accuracy. In addition, the total volume before and after adjustment can be the same, or the difference between the total volume before and after adjustment can be less than the preset value.

In this embodiment of this application, during system volume adjustment, if a difference between the unadjusted system volume value and the adjusted system volume value is excessively large, level-by-level adjustment needs to be performed.

FIG. 5 is a linear schematic diagram in which a computer adjusts system volume in different cases according to an embodiment of this application. As shown in (a) in FIG. 5, an initial V represents a current system volume value (an unadjusted system volume value) 0.2. A target V represents a preset volume value (an adjusted system volume value) 0.4. A difference ΔV between the initial V and the target V is 0.2, and is greater than a preset adjustment value 0.1. In this case, a multiple of the difference and the preset adjustment value may be used as a quantity of adjustment times, that is, the system volume is adjusted twice. The computer adjusts the system volume from 0.2 to 0.3, and then adjusts the system volume from 0.3 to 0.4. This implements level-by-level adjustment, and avoids a case in which a loudness error increases due to an excessively large adjustment. As shown in (b) in FIG. 5, if the initial V is 0.3, the target V is 0.4, and the difference between the initial V and the target V is 0.1, the computer may adjust the system volume value from 0.3 to 0.4 once. This implements a quick adjustment process.

In some scenarios, FIG. 6 is a diagram of a sudden amplitude change in a time-domain signal of high-frequency audio. As shown in FIG. 6, when a computer system suddenly plays or stops the high-frequency audio, the sudden amplitude change occurs on the time-domain signal, that is, a plosive sound is generated. As a result, auditory experience of the user is unpleasant, and an ultrasonic gesture recognition rate is affected. The following describes in detail a specific process of resolving the problem.

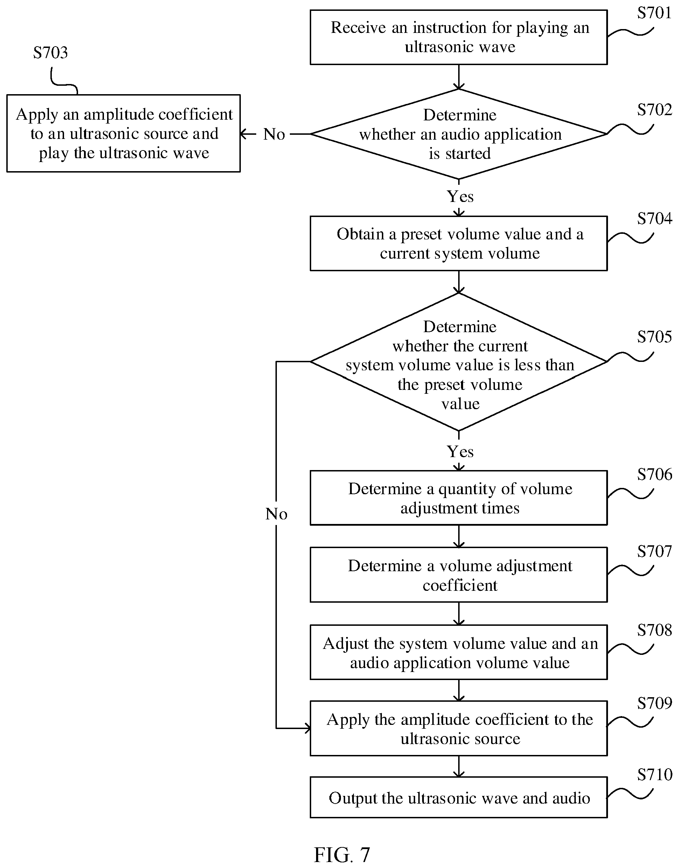

FIG. 7 is a flowchart of a volume control method performed by a computer in another scenario according to an embodiment of this application. The method is performed by a PC. As shown in FIG. 7, the flowchart includes S701 to S710.

S701: Receive an instruction for playing an ultrasonic wave. For a specific implementation process of receiving the instruction, refer to the description in S301 in FIG. 3. This is not described herein. Different from S301, in this step, it is not determined that an ultrasonic wave transmitting switch is turned on, but a turn-on instruction is received before the ultrasonic wave transmitting switch is turned on. In this case, the computer does not immediately play the ultrasonic wave, but performs S702 to S710.

S702 and S704 to S708 are respectively corresponding to S302, and 304 to 308 in FIG. 3. For a specific process, refer to the descriptions corresponding to FIG. 3. Details are not described herein.

In S702, after determining that an audio application is started, the computer performs S704 to S708 to adjust a system volume value and an application volume value, and then performs S709. In addition, in some embodiments, S709 may alternatively be performed after S701 and before S702. The ultrasonic wave is output after S709 is performed.

In S709, the computer applies an amplitude coefficient to an ultrasonic source. The computer applies the amplitude coefficient to the ultrasonic source. In this case, an amplitude of the ultrasonic wave gradually increases from 0 to 1, instead of being directly adjusted from 0 to 1. This further effectively avoids a plosive sound. In addition, in S703 and S709, steps in which the computer applies the amplitude coefficient to the ultrasonic source to play the ultrasonic wave are the same. For a specific process, refer to detailed descriptions for S709 in the following embodiments.

In S710, the computer outputs the ultrasonic wave and the audio. Based on the foregoing function relationship, the amplitude is gradually increased when the ultrasonic wave is played. Therefore, no plosive sound is generated. In addition, the user perceives no change in loudness of the played audio. This improves user experience.

The following specifically describes S709.

In an embodiment of this application, when the ultrasonic wave is played, the amplitude coefficient used in the ultrasonic source varies with time, and the formula is as follows:

$$k(t) = \begin{cases} 0 & t < 0 \\ f(t) & 0 < t < T \\ T & t \geq T \end{cases}$$

T is a fade-in cycle, and f(t) is a fade-in function. The formula represents that the amplitude coefficient is 0 when the time is less than 0. The amplitude reaches 1 when the time is greater than the fade-in cycle. When 0 < time t < the cycle T, the amplitude gradually changes with the time, instead of directly changing from 0 to 1 or changing from 1 to 0.

In an embodiment of this application, the fade-in function may use the following two formulas:

$$f_1(t) = t/\text{T} \quad \text{(Formula 1)}$$

$$f_2(t) = (sin\left(\frac{\pi}{T}t - \frac{\pi}{2}\right) + 1)/2 \quad \text{(Formula 2)}$$

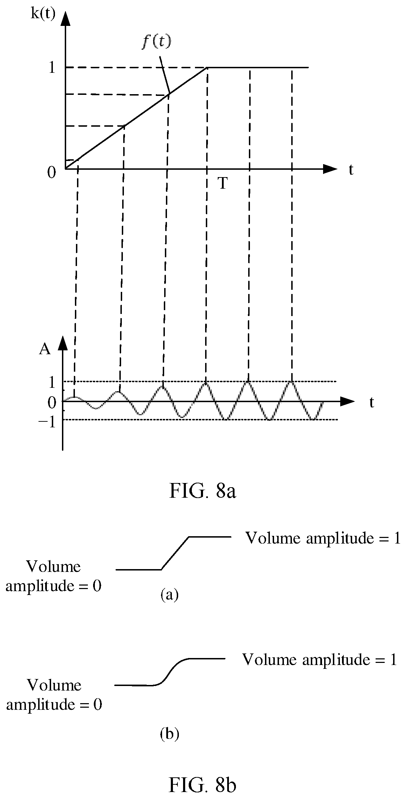

Refer to FIG. 8a and FIG. 8b. FIG. 8a is a waveform diagram in which an amplitude changes with a cycle based on a fade-in function. As shown in FIG. 8a, when t is 0, the amplitude coefficient k(t) is 0, and when 0 < t < T, k(t) is f(t). f(t) may be a function in Formula 1. In some embodiments, f(t) may alternatively be a function in Formula 2. When t = T, the amplitude coefficient k(t) is 1. The amplitude coefficient is multiplied by the ultrasonic wave to obtain the waveform diagram shown in FIG. 8a. The waveform diagram of the ultrasonic wave can show a process in which the amplitude gradually increases.

FIG. 8b are linear schematic diagrams in which amplitudes that respectively correspond to fade-in function Formula 1 and Formula 2 and that change with time. As shown in FIG. 8b, the amplitude corrected by the amplitude coefficient gradually increases with time, effectively avoiding a plosive sound due to a sudden amplitude change.

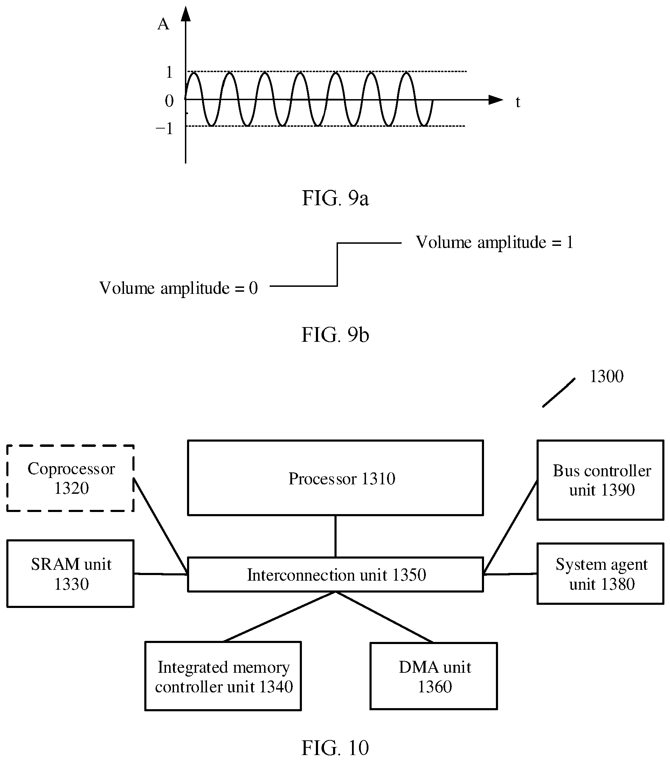

Refer to FIG. 9a and FIG. 9b. FIG. 9a is a schematic diagram in which an amplitude changes with time obtained without adding an amplitude coefficient. As shown in FIG. 9a, the amplitude without adding the amplitude coefficient does not gradually increase with time t, but directly changes from 0 to 1. FIG. 9b is a linear schematic diagram in which an amplitude changes with time without adding an amplitude coefficient. It can also be learned that the amplitude without adding the amplitude coefficient does not gradually increase with time t, but directly changes from 0 to 1. Therefore, compared with the existing solution without adding the amplitude coefficient, the solution in this embodiment of this application can effectively alleviate a sudden amplitude change when the ultrasonic wave is played or stops playing. Further, the plosive sound can be effectively avoided, and user experience is improved.

Based on a same principle, when the ultrasonic wave is turned off, the amplitude gradually reduces from 1 to 0 based on a fade-out function. This avoids the plosive sound from generating due to a sudden ultrasonic amplitude change.

The volume control method in this embodiment of this application can ensure the loudness of the ultrasonic wave and the ultrasonic recognition accuracy or detection accuracy. It can also be ensured that the listening volume of the user before and after adjustment is the same. In addition, no plosive sound is generated at a moment of turning on or off the ultrasonic wave. This effectively improves user experience.

This application further provides an electronic device, including:

a memory, configured to store instructions executed by one or more processors of the device; and
a processor, configured to perform the methods explained with reference to FIG. 3 and FIG. 7 in the foregoing embodiments.

This application further provides a computer-readable storage medium. The computer-readable storage medium stores a computer program. When the computer program is run by a processor, the processor is enabled to perform the methods described in FIG. 3 and FIG. 7 in the foregoing embodiments.

This application further provides a computer program product including instructions. When the computer program product runs on an electronic device, a processor is enabled to perform the methods shown in FIG. 3 and FIG. 7 in the foregoing embodiments.

FIG. 10 is a block diagram of an SoC (System on Chip, system on chip) 1300 according to an embodiment of this application. In FIG. 10, similar components have a same reference numeral. In addition, a dashed-line box is an optional feature of a more advanced SoC. In FIG. 10, the SoC 1300 includes an interconnection unit 1350 coupled to an application processor 1310; a system agent unit 1380; a bus controller unit 1390; an integrated memory controller unit 1340; one group of or one or more coprocessors 1320, which may include integrated graphics logic, an image processor, an audio processor, and a video processor; a static random access memory (Static Random Access Memory, SRAM) unit 1330; and a direct memory access (DMA) unit 1360. In an embodiment, the coprocessor 1320 includes a dedicated processor, for example, a network or communication processor, a compression engine, a GPGPU, a high-throughput MIC processor, or an embedded processor.

The static random access memory (SRAM) unit 1330 may include one or more computer-readable media configured to store data and/or instructions. The computer-readable storage medium may store instructions, and specifically, store temporary and permanent copies of the instructions. The instructions may include: when being executed by at least one unit in the processor, the instructions enable the Soc 1300 to perform the methods according to the foregoing embodiments. For details, refer to the methods described in FIG. 3 and FIG. 7 in the foregoing embodiments. Details are not described herein.

Embodiments of mechanisms disclosed in this application may be implemented in hardware, software, firmware, or a combination of these implementations. Embodiments of this application may be implemented as a computer program or program code that is executed on a programmable system. The programmable system includes at least one processor, a storage system (including a volatile, a non-volatile memory, and/or a storage element), at least one input device, and at least one output device.

The program code may be used for inputting instructions, to perform functions described in this application and generate output information. The output information may be applied to one or more output devices in a known manner. For a purpose of this application, a processing system includes any system that has a processor like a digital signal processor (Digital Signal Processor, DSP), a microcontroller, an application-specific integrated circuit (Application-Specific Integrated Circuit, ASIC), or a microprocessor.

The program code may be implemented in a high-level procedural language or an object-oriented programming language, to communicate with the processing system. The program code may alternatively be implemented in an assembly language or a machine language when needed. Actually, the mechanisms described in this application are not limited to a scope of any particular programming language. In any case, the language may be a compiled language or an interpreted language.

In some cases, the disclosed embodiments may be implemented by hardware, firmware, software, or any combination thereof. The disclosed embodiments may alternatively be implemented as instructions carried or stored on one or more transitory or non-transitory machine-readable (for example, computer-readable) storage medium, and the instructions may be read and executed by one or more processors. For example, the instructions may be distributed over a network or by using another computer-readable medium. Therefore, the machine-readable medium may include any mechanism for storing or transmitting information in a machine-readable (for example, a computer) form. The machine-readable medium includes but is not limited to a floppy disk, a compact disc, an optical disc, a compact disc read-only memory (Compact Disc Read Only Memory, CD-ROM), a magneto-optical disc, a read-only memory (Read Only Memory, ROM), a random access memory (RAM), an erasable programmable read-only memory (Erasable Programmable Read Only Memory, EPROM), an electrically erasable programmable read-only memory (Electrically Erasable Programmable Read Only Memory, EEPROM), a magnetic or an optical card, a flash memory, or a tangible machine-readable memory that is configured to transmit information (for example, a carrier, an infrared signal, or a digital signal) by using a propagating signal in an electrical, optical, acoustic, or another form over the Internet. Therefore, the machine-readable medium includes any type of machine-readable medium suitable for storing or transmitting electronic instructions or information in a machine-readable (for example, a computer) form.

In the accompanying drawings, some structural or method features may be shown in a particular arrangement and/or order. However, it should be understood that such a particular arrangement and/or order may not be needed. In some embodiments, these features may be arranged in a manner and/or order different from that shown in the accompanying drawings of the specification. In addition, inclusion of the structural or method features in a specific figure does not imply that such features are needed in all embodiments. In some embodiments, these features may not be included or may be combined with another feature.

It should be noted that all units/modules mentioned in the device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important. A combination of functions implemented by these logical units/modules is a key to resolving technical problems proposed in this application. In addition, to highlight an innovative part of this application, a unit/module that is not closely related to resolving the technical problems proposed in this application is not introduced in the foregoing device embodiments of this application. This does not mean that there are no other units/modules in the foregoing device embodiments.

It should be noted that in the examples and the specification of this patent, relational terms such as first and second are used only to differentiate one entity or operation from another entity or operation, and do not require or imply that any actual relationship or sequence exists between these entities or operations. Moreover, terms "include", "comprise", or any other variants thereof are intended to cover a non-exclusive inclusion, so that a process, a method, an article, or a device that includes a list of elements includes those elements, and also includes another element that is not expressly listed, or further includes an element inherent to this process, method, article, or device. An element preceded by a statement "includes a" does not, without more constraints, preclude the presence of additional identical elements in the process, method, article, or device that includes the element.

## Claims

1. A volume control method, applied to an electronic device, wherein the electronic device comprises an audio system with a speaker and a microphone, and the audio system is capable of emitting simultaneously an ultrasonic wave and a sound wave perceivable to human ears as audio via the speaker, and to receive a ultrasonic echo signal by the microphone, the method comprising:
determining (S302), by the electronic device, that a target application is started, wherein the target application is an application that is to output audio; **characterized by** the method further comprising:

   determining (S305) if the system volume value is less than a preset volume value, and
   if yes, then adjusting (S308), by the electronic device, the system volume value to be greater than or equal to the preset volume value, and adjusting the volume value of the target application based on the adjusted system volume value, so that the listening volume emitted by the electronic device remains unchanged, wherein the preset volume value is the minimum system volume value required to meet ultrasonic recognition accuracy,
   wherein the adjusting the volume value of the target application comprises:

   determining (S307), by the electronic device, a volume adjustment coefficient corresponding to both the unadjusted system volume value and the adjusted system volume value, and adjusting the volume value of the target application based on the volume adjustment coefficient; and
   wherein ensuring that the listening volume remains unchanged comprises:
   the difference between a value obtained by multiplying the unadjusted system volume value by the unadjusted application volume value and a value obtained by multiplying the adjusted system volume value by an adjusted application volume value by the volume adjustment coefficient to fall within a preset range.

2. The method according to claim 1, wherein the method further comprises:
determining, by the electronic device, that an ultrasonic wave control switch is turned on, and emitting the ultrasonic wave by using the audio system.

3. The method according to any one of claims 1 to 2, wherein the adjusting, by the electronic device, the system volume value to be greater than or equal to the preset volume value comprises:
adjusting, by the electronic device, the system volume value to be greater than or equal to the preset volume value level by level for a plurality of times.

4. The method according to any one of claims 1 to 3, wherein the determining, by the electronic device, a volume adjustment coefficient corresponding to both the unadjusted system volume value and the adjusted system volume value comprises:
inputting, by the electronic device, the unadjusted system volume and the adjusted system volume value into an adjustment coefficient model, to obtain the volume adjustment coefficient corresponding to both the system volume value and the adjusted system volume value.

5. The method according to claim 4, wherein the adjustment coefficient model is obtained through training based on an unadjusted system volume value and an adjusted system volume value of at least one sound source, and a difference between the unadjusted system volume value and the adjusted system volume value.

6. The method according to any one of claims 1 to 3, wherein the determining, by the electronic device, a volume adjustment coefficient corresponding to both the unadjusted system volume value and the adjusted system volume value comprises:
obtaining, by the electronic device from a coefficient comparison table based on the unadjusted system volume value and the adjusted system volume value, the volume adjustment coefficient corresponding to both the system volume value and the adjusted system volume value.

7. The method according to any one of claims 1 to 6, wherein the determining, by the electronic device, that a target application is started comprises:
when determining that a currently started application is an application in a list, determining, by the electronic device, that the target application is started.

8. The method according to claim 2, wherein the electronic device adjusts the system volume value to the preset volume value when determining that the ultrasonic wave control switch is turned on and no target application is started.

9. The method according to any one of claims 1 to 8, further comprising:
when emitting the ultrasonic wave by using the audio system, gradually increasing, by the electronic device, an amplitude of the ultrasonic wave in ascending order for playing the ultrasonic wave until a maximum amplitude is reached.

10. The method according to any one of claims 1 to 9, further comprising:

when turning off play of the ultrasonic wave, gradually decreasing, by the electronic device, the amplitude in descending order until the amplitude is zero.

11. An electronic device, comprising:

a speaker (170A), configured to emit simultaneously an ultrasonic wave and a sound wave perceivable to human ears as audio via the speaker;

a microphone (170C) configured to receive a ultrasonic echo signal;

a memory (121), configured to store instructions executed by one or more processors (110) of the device; and

the processor, configured to execute the instructions, so that the processor determines that a target application is started, wherein the target application is an application is to output audio, **characterized in that** the processor is configured to determine if the system volume value is less than a preset volume value, and

if yes, the processor is configured to adjust the system volume value to be greater than or equal to the preset volume value, and adjusts the volume value of the target application based on the adjusted system volume value, so that the listening volume emitted by using the speaker remains unchanged, wherein the preset volume value is the minimum system volume value to meet ultrasonic recognition accuracy;

wherein the processor is configured to determine a volume adjustment coefficient corresponding to both the unadjusted system volume value and the adjusted system volume value; and

wherein ensuring that the listening volume remains unchanged comprises:

the difference between a value obtained by multiplying the unadjusted system volume value by the unadjusted application volume value and a value obtained by multiplying the adjusted system volume value by an adjusted application volume value by the volume adjustment coefficient to fall within a preset range.

12. The device according to claim 11, wherein the processor is configured to: determine that an ultrasonic wave control switch is turned on, and emit the ultrasonic wave by using the speaker.

13. The device according to any one of claims 11 to 12, wherein the processor adjusts the system volume value to be greater than or equal to the preset volume value level by level for a plurality of times.

**Patentansprüche**

1. Verfahren zur Lautstärkesteuerung, angewandt auf ein elektronisches Gerät, wobei das elektronische Gerät ein Audiosystem mit einem Lautsprecher und einem Mikrofon umfasst und das Audiosystem in der Lage ist, gleichzeitig eine Ultraschallwelle und eine Schallwelle, die für das menschliche Ohr wahrnehmbar ist, als Ton über den Lautsprecher auszustrahlen und durch das Mikrofon ein Ultraschall-Echosignal zu empfangen, wobei das Verfahren ferner Folgendes umfasst:

Bestimmen (S302) durch das elektronische Gerät, dass eine Zielanwendung gestartet wurde, wobei die Zielanwendung eine Anwendung zum Ausgeben von Tönen ist, **dadurch gekennzeichnet, dass** das Verfahren ferner Folgendes umfasst:

Bestimmen (S305), ob der Lautstärkewert des Systems kleiner als ein voreingestellter Lautstärkewert ist, und

falls ja, Justieren (S308) des Lautstärkewertes des Systems auf größer oder gleich dem voreingestellten Lautstärkewert und Justieren des Lautstärkewerts der Zielanwendung, basierend auf dem justierten Lautstärkewert des Systems, durch das elektronische Gerät derart, dass die Hörlautstärke, die von dem elektronische Gerät ausgestrahlt wird, unverändert bleibt, wobei der voreingestellte Lautstärkewert der minimale Lautstärkewert des Systems ist, der erforderlich ist, um die Ultraschallerkennungsgenauigkeit zu erfüllen,

wobei das Justieren des Lautstärkewerts der Zielanwendung Folgendes umfasst:

Bestimmen (S307) eines Koeffizienten der Lautstärkejustierung entsprechend sowohl dem unjustierten Lautstärkewert des Systems als auch dem justierten Lautstärkewert des Systems und Justieren des Lautstärkewerts der Zielanwendung, basierend auf dem Koeffizienten der Lautstärkejustierung, durch das elektronische Gerät und wobei das Sicherstellen, dass die Hörlautstärke unverändert bleibt, Folgendes umfasst:

die Differenz zwischen einem Wert, der durch Multiplizieren des unjustierten Lautstärkewertes des Systems mit dem unjustierten Lautstärkewert der Anwendung erhalten wird, und einem Wert, der durch Multiplizieren des justierten Lautstärkewertes des Systems mit einem justierten Lautstärkewert der Anwendung und dem Koeffizienten der Lautstärkejustierung erhalten wird, liegt in einem voreingestellten Bereich.

2. Verfahren nach Anspruch 1, wobei das Verfahren ferner Folgendes umfasst:
Bestimmen durch das elektronische Gerät, dass ein Ultraschallwellen-Steuerungsschalter angeschaltet ist und Ausstrahlen der Ultraschallwelle unter Verwendung des Audiosystems.

3. Verfahren nach einem der Ansprüche 1 bis 2, wobei das Justieren des Lautstärkewertes des Systems auf größer oder gleich dem voreingestellten Lautstärkewert durch das elektronische Gerät Folgendes umfasst:
mehrmaliges Justieren des Lautstärkewertes des Systems auf größer oder gleich dem voreingestellten Lautstärkewert durch das elektronische Gerät Pegel für Pegel.

4. Verfahren nach einem der Ansprüche 1 bis 3, wobei das Bestimmen eines Koeffizienten der Lautstärkejustierung entsprechend sowohl dem unjustierten Lautstärkewert des Systems als auch dem justierten Lautstärkewert des Systems durch das elektronische Gerät Folgendes umfasst:
Eingeben der unjustierten Lautstärke des Systems und des justierten Lautstärkewertes des Systems in ein Justierungskoeffizientenmodell durch das elektronische Gerät, um den Koeffizienten der Lautstärkejustierung zu erhalten, der sowohl dem Lautstärkewert des Systems als auch dem justierten Lautstärkewert des Systems entspricht.

5. Verfahren nach Anspruch 4, wobei das Justierungskoeffizientenmodell durch Trainieren, basierend auf einem unjustierten Lautstärkewert des Systems und einem justierten Lautstärkewert des Systems von mindestens einer Schallquelle und einer Differenz zwischen dem unjustierten Lautstärkewert des Systems und dem justierten Lautstärkewert des Systems, erhalten wird.

6. Verfahren nach einem der Ansprüche 1 bis 3, wobei das Bestimmen eines Koeffizienten der Lautstärkejustierung entsprechend sowohl dem unjustierten Lautstärkewert des Systems als auch dem justieren Lautstärkewert des Systems durch das elektronische Gerät Folgendes umfasst:
Erhalten des Koeffizienten der Lautstärkejustierung entsprechend sowohl dem Lautstärkewert des Systems als auch dem justieren Lautstärkewert des Systems durch das elektronische Gerät aus einer Koeffizientenvergleichstabelle, basierend auf dem unjustierten Lautstärkewert des Systems und dem justierten Lautstärkewert des Systems.

7. Verfahren nach einem der Ansprüche 1 bis 6, wobei das Bestimmen, dass eine Zielanwendung gestartet wurde, durch das elektronische Gerät Folgendes umfasst:

Bestimmen durch das elektronische Gerät, dass die Zielanwendung gestartet wurde, wenn bestimmt wird, dass eine gegenwärtig gestartete Anwendung eine Anwendung in einer Liste ist.

8. Verfahren nach Anspruch 2, wobei das elektronische Gerät den Lautstärkewert des Systems auf den voreingestellten Lautstärkewert justiert, wenn bestimmt wird, dass der Ultraschallwellen-Steuerungsschalter angeschaltet und keine Zielanwendung gestartet ist.

9. Verfahren nach einem der Ansprüche 1 bis 8, ferner Folgendes umfassend:
schrittweises Erhöhen einer Amplitude der Ultraschallwelle in aufsteigender Reihenfolge zum Abspielen der Ultraschallwelle, bis eine maximale Amplitude erreicht ist, durch das elektronische Gerät, wenn die Schallwelle unter Verwendung des Audiosystems ausgestrahlt wird.

10. Verfahren nach einem der Ansprüche 1 bis 9, ferner Folgendes umfassend:
schrittweises Verkleinern der Amplitude in absteigender Reihenfolge, bis die Amplitude null ist, durch das elektronische Gerät, wenn das Abspielen der Ultraschallwelle ausgeschaltet wird.

11. Elektronisches Gerät, Folgendes umfassend:

einen Lautsprecher (170A), der dafür konfiguriert ist, gleichzeitig eine Ultraschallwelle und eine Schallwelle, die für das menschliche Ohr wahrnehmbar ist, als Ton über den Lautsprecher auszustrahlen,
ein Mikrofon (170C), das dafür konfiguriert ist, ein Ultraschall-Echosignal zu empfangen,
einen Speicher (121), der dafür konfiguriert ist, Anweisungen zu speichern, die durch einen oder mehrere Prozessoren (110) des Geräts ausgeführt werden, und
den Prozessor, der dafür konfiguriert ist, die Anweisungen derart auszuführen, dass der Prozessor bestimmt, dass eine Zielanwendung gestartet wurde, wobei die Zielanwendung eine Anwendung zum Ausgeben von Tönen ist,
**dadurch gekennzeichnet, dass** der Prozessor dafür konfiguriert ist zu bestimmen, ob der Lautstärkewert des Systems kleiner als ein voreingestellter Lautstärkewert ist, und
der Prozessor dafür konfiguriert ist, falls ja, den Lautstärkewert des Systems auf größer oder gleich dem voreingestellten Lautstärkewert zu justieren und den Lautstärkewert der Zielanwendung, basierend auf dem justierten Lautstärkewert des Systems, derart justiert, dass die Hörlautstärke, die unter Verwendung des Lautsprechers ausgestrahlt wird, unverändert bleibt, wobei der voreingestellte Lautstärkewert der minimale Lautstärkewert des Systems ist, der erforderlich ist, um die Ultraschallerkennungsgenauigkeit zu erfüllen,

wobei der Prozessor dafür konfiguriert ist, einen Koeffizienten der Lautstärkejustierung entsprechend sowohl dem unjustierten Lautstärkewert des Systems als auch dem justierten Lautstärkewert des Systems zu bestimmen, und

wobei das Sicherstellen, dass die Hörlautstärke unverändert bleibt, Folgendes umfasst:

die Differenz zwischen einem Wert, der durch Multiplizieren des unjustierten Lautstärkewertes des Systems mit dem unjustierten Lautstärkewert der Anwendung erhalten wird, und einem Wert, der durch Multiplizieren des justierten Lautstärkewertes des Systems mit einem justierten Lautstärkewert der Anwendung und dem Koeffizienten der Lautstärkejustierung erhalten wird, liegt in einem voreingestellten Bereich.

**12.** Gerät nach Anspruch 11, wobei
der Prozessor für Folgendes konfiguriert ist: Bestimmen, dass ein Ultraschallwellen-Steuerungsschalter angeschaltet ist, und Ausstrahlen der Ultraschallwelle unter Verwendung des Lautsprechers.

**13.** Gerät nach einem der Ansprüche 11 bis 12, wobei der Prozessor den Lautstärkewert des Systems auf größer oder gleich dem voreingestellten Lautstärkewert mehrmals Pegel für Pegel justiert.

**Revendications**

**1.** Procédé de réglage de volume, appliqué à un dispositif électronique, dans lequel le dispositif électronique comprend un système audio comportant un haut-parleur et un microphone, et le système audio est apte à émettre simultanément une onde ultrasonore et une onde sonore pouvant être perçue par les oreilles humaines sous forme audio par le biais du haut-parleur, et à recevoir un signal d'écho ultrasonore par le microphone, le procédé comprenant : la détermination (S302), par le dispositif électronique, qu'une application cible a démarré, dans lequel l'application cible est une application qui sert à émettre une sortie audio ; **caractérisé en ce que** le procédé comprend en outre :

la détermination (S305) de si la valeur de volume système est inférieure à une valeur de volume prédéfinie, et

si oui, alors le réglage (S308), par le dispositif électronique, de la valeur de volume système afin qu'elle soit supérieure ou égale à la valeur de volume prédéfinie, et le réglage de la valeur de volume de l'application cible sur la base de la valeur de volume système réglée, de sorte que le volume d'écoute émis par le dispositif électronique reste inchangé, dans lequel la valeur de volume prédéfinie est la valeur de volume système minimale requise pour satisfaire une exactitude de reconnaissance ultrasonore,

dans lequel le réglage de la valeur de volume de l'application cible comprend :

la détermination (S307), par le dispositif électronique, d'un coefficient de réglage de volume correspondant à la fois à la valeur de volume système non réglée et à la valeur de volume système réglée, et le réglage de la valeur de volume de l'application cible sur la base du coefficient de réglage de volume ; et

dans lequel la garantie que le volume d'écoute reste inchangé consiste **en ce que** : la différence entre une valeur obtenue en multipliant la valeur de volume système non réglée par la valeur de volume d'application non réglée et une valeur obtenue en multipliant la valeur de volume système réglée par une valeur de volume d'application réglée par le coefficient de réglage de volume doit tomber dans une plage prédéfinie.

**2.** Procédé selon la revendication 1, le procédé comprenant en outre :
la détermination, par le dispositif électronique, qu'un commutateur de commande d'onde ultrasonore est allumé, et l'émission de l'onde ultrasonore au moyen du système audio.

**3.** Procédé selon l'une quelconque des revendications 1 et 2, dans lequel le réglage, par le dispositif électronique, de la valeur de volume système afin qu'elle soit supérieure ou égale à la valeur de volume prédéfinie comprend :
le réglage, par le dispositif électronique, de la valeur de volume système afin qu'elle soit supérieure ou égale à la valeur de volume prédéfinie niveau par niveau en plusieurs fois.

**4.** Procédé selon l'une quelconque des revendications 1 à 3, dans lequel la détermination, par le dispositif électronique, d'un coefficient de réglage de volume correspondant à la fois à la valeur de volume système non réglée et à la valeur de volume système réglée comprend :
l'entrée, par le dispositif électronique, du volume système non réglé et de la valeur de volume système réglée dans un modèle de coefficient de réglage pour obtenir le coefficient de réglage de volume correspondant à la fois à la valeur de volume système et à la valeur de volume système réglée.

**5.** Procédé selon la revendication 4, dans lequel le modèle de coefficient de réglage est obtenu par l'intermédiaire d'un entraînement sur la base d'une valeur de volume système non réglée et d'une valeur de volume système réglée d'au moins une source sonore, et d'une différence entre la valeur de volume système non réglée et la valeur de volume système réglée.

**6.** Procédé selon l'une quelconque des revendications 1 à 3, dans lequel la détermination, par le dispositif électronique, d'un coefficient de réglage de volume correspondant à la fois à la valeur de volume système non réglée et à la valeur de volume système réglée comprend :
l'obtention, par le dispositif électronique depuis une table de comparaison de coefficients sur la base de la valeur de volume système non réglée et de la valeur de volume système réglée, du coefficient de réglage de volume correspondant à la fois à la valeur de volume système et à la valeur de volume système réglée.

**7.** Procédé selon l'une quelconque des revendications 1 à 6, dans lequel la détermination, par le dispositif électronique, qu'une application cible a démarré comprend :
lors de la détermination qu'une application en cours de démarrage est une application dans une liste, la détermination, par le dispositif électronique, que l'application cible a démarré.

**8.** Procédé selon la revendication 2, dans lequel le dispositif électronique règle la valeur de volume système à la valeur de volume prédéfinie lors de la détermination que le commutateur de commande d'onde ultrasonore est allumé et qu'aucune application cible n'est démarrée.

**9.** Procédé selon l'une quelconque des revendications 1 à 8, comprenant en outre :
lors de l'émission de l'onde ultrasonore au moyen du système audio, l'augmentation graduelle, par le dispositif électronique, d'une amplitude de l'onde ultrasonore dans l'ordre croissant pour émettre l'onde ultrasonore jusqu'à atteindre une amplitude maximale.

**10.** Procédé selon l'une quelconque des revendications 1 à 9, comprenant en outre :
lors de l'arrêt de l'émission de l'onde ultrasonore, la diminution graduelle, par le dispositif électronique, de l'amplitude dans l'ordre décroissant jusqu'à ce que l'amplitude soit égale à zéro.

**11.** Dispositif électronique, comprenant :

un haut-parleur (170A), configuré pour émettre simultanément une onde ultrasonore et une onde sonore pouvant être perçue par les oreilles humaines sous forme audio par le biais du haut-parleur ;
un microphone (170C), configuré pour recevoir un signal d'écho ultrasonore ;
une mémoire (121), configurée pour stocker des instructions exécutées par un ou plusieurs processeurs (110) du dispositif ; et
le processeur, configuré pour exécuter les instructions, de telle sorte que le processeur détermine qu'une application cible a démarré, dans lequel l'application cible est une application qui sert à émettre une sortie audio,
**caractérisé en ce que** le processeur est configuré pour déterminer si la valeur de volume système est inférieure à une valeur de volume prédéfinie, et
si oui, le processeur est configuré pour régler la valeur de volume système afin qu'elle soit supérieure ou égale à la valeur de volume prédéfinie, et régler la valeur de volume de l'application cible sur la base de la valeur de volume système réglée, de sorte que le volume d'écoute émis au moyen du haut-parleur reste inchangé, dans lequel la valeur de volume prédéfinie est la valeur de volume système minimale requise pour satisfaire une exactitude de reconnaissance ultrasonore,
dans lequel le processeur est configuré pour déterminer un coefficient de réglage de volume correspondant à la fois à la valeur de volume système non réglée et à la valeur de volume système réglée ; et
dans lequel la garantie que le volume d'écoute reste inchangé consiste **en ce que** :
la différence entre une valeur obtenue en multipliant la valeur de volume système non réglée par la valeur de volume d'application non réglée et une valeur obtenue en multipliant la valeur de volume système réglée par une valeur de volume d'application réglée par le coefficient de réglage de volume doit tomber dans une plage prédéfinie.

**12.** Dispositif selon la revendication 11, dans lequel le processeur est configuré pour : déterminer qu'un commutateur de commande d'onde ultrasonore est allumé, et émettre l'onde ultrasonore au moyen du haut-parleur.

**13.** Dispositif selon l'une quelconque des revendications 11 et 12, dans lequel le processeur règle la valeur de volume système afin qu'elle soit supérieure ou égale à la valeur de volume prédéfinie niveau par niveau en plusieurs fois.

Computer 10

Transmit wave

User 20

Receive wave

FIG. 1a

Computer 10

| Ultrasonic signal |

Transmit wave

| Time/Frequency domain feature extraction |

Receive wave

| Misrecognition filtering |

| Gesture classifier |

| Gesture recognition result |

FIG. 1b

Computer 10

Device (D)

Speaker

Application

System sound

Audio application

Gesture recognition application

1

101

0

System volume

Application volume

102

FIG. 1c

Non-linear relationship function $f$

System volume

Application volume

Playing

Loudness

FIG. 1d

Electronic device 100

Antenna 1

Antenna 2

| Mobile communication module<br>2G/3G/4G/5G<br>[150] |
|---|

| Wireless communication module<br>BT/WLAN/GNSS/NFC/IR/FM<br>[160] |
|---|

Speaker [170A]

Receiver [170B]

Audio module [170]

Microphone [170C]

Headset jack [170D]

Displays 1 to N [194]

Cameras 1 to N [193]

Indicator [192]

Motor [191]

Button [190]

Internal memory [121]

SIM card interfaces 1 to N [195]

External memory interface [120]

Processor [110]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

USB interface [130]

Charging input

Charging management module [140]

Power management module [141]

Battery [142]

FIG. 2a

| Application layer | Ultrasonic application | Audio application | Adjust the application volume |
| --- | --- | --- | --- |

Preset volume value V1/ application volume v1

Current system volume V2/ application volume v2

V1/v1          V2/v2

**Application framework layer**

Start the two applications

Determine that the current system volume needs to be adjusted

Volume adjustment coefficient

| Start determining module | → | Volume determining module | → | Obtaining module | → | Volume adjustment execution module |
| --- | --- | --- | --- | --- | --- | --- |

Read the volume adjustment coefficient

**System library**

**Kernel layer**

Audio driver

Adjust the system volume

**Hardware layer**

Database          Speaker ← Volume controller

FIG. 2b

FIG. 3

| Unadjusted system volume value Vi | Adjusted system volume value Vj | Volume adjustment coefficient |
|---|---|---|
| 0 | 0.1 | 0.4 |
| 0.1 | 0.2 | 0.4 |
| 0.2 | 0.3 | 0.425 |
| 0.3 | 0.4 | 0.78 |
| 0.4 | 0.5 | 0.82 |
| 0.5 | 0.6 | 0.85 |
| 0.6 | 0.7 | 0.93 |
| 0.7 | 0.8 | 0.99 |
| 0.8 | 0.9 | 1.03 |
| 0.9 | 1.0 | 1.10 |

FIG. 4

Initial V 0.2     0.3     Target V 0.4

$\Delta V > 0.1$

(a)

Initial V 0.3     Target V 0.4

$\Delta V \leq 0.1$

(b)

FIG. 5

FIG. 6

S703

Apply an amplitude coefficient
to an ultrasonic source and
play the ultrasonic wave

Receive an instruction for playing an
ultrasonic wave    S701

Determine
whether an audio application
is started    S702

← No

Yes

Obtain a preset volume value and a
current system volume    S704

Determine
whether the current
system volume value is less than
the preset volume
value    S705

No

Yes

Determine a quantity of volume
adjustment times    S706

Determine a volume adjustment
coefficient    S707

Adjust the system volume value and an
audio application volume value    S708

Apply the amplitude coefficient to the
ultrasonic source    S709

Output the ultrasonic wave and audio    S710

FIG. 7

FIG. 8a

Volume
amplitude = 0

Volume amplitude = 1

(a)

Volume
amplitude = 0

Volume amplitude = 1

(b)

FIG. 8b

FIG. 9a

FIG. 9b

FIG. 10

**EP 4 451 108 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210093467X

- US 2021239831 A1